# EUROPÄISCHE PATENTSCHRIFT

(11) **EP 2 089 696 B1**
(45) Veröffentlichungstag und Bekanntmachung des Hinweises auf die Patenterteilung: **28.09.2011**
(21) Anmeldenummer: 07819532.8
(22) Anmeldetag: 02.11.2007
(51) Int. Cl.: G01N 25/68, G01N 27/12, G01N 27/22

(54) **Verfahren zur Herstellung eines Sensors und nach diesem Verfahren hergestellter Sensor**
Method of manufacturing a sensor and corresponding sensor
Procédé de fabrication d'un capteur et capteur ainsi fabriqué

(30) Priorität: 13.11.2006 DE 102006053689
(43) Veröffentlichungstag der Anmeldung: 19.08.2009
(73) Patentinhaber: Vishay BCComponents Beyschlag GmbH, 25746 Heide (DE)
(72) Erfinder: WERNER, Wolfgang, 25746 Wessein (DE); AURICH, Joachim, 25782 Welmbüttel (DE); WERTH, Sascha, 24768 Rendsburg (DE)
(74) Vertreter: Richter, Werdermann, Gerbaulet & Hofmann
(86) Internationale Anmeldenummer: PCT/EP2007/009505
(87) Internationale Veröffentlichungsnummer: WO 2008/058637

(56) Entgegenhaltungen:
- DE-A1- 10 114 230
- DE-A1- 19 606 272
- DE-A1- 19 708 053
- DE-C1- 10 015 430
- VAIVARS G ET AL: "Influence of thin film coatings on the gas sensitivity properties of narrow laser cut gap in In2O3 on glass substrate" SENSORS AND ACTUATORS B, ELSEVIER SEQUOIA S.A., LAUSANNE, CH, Bd. 33, Nr. 1, Juli 1996 (1996-07), Seiten 173-177, XP004013064 ISSN: 0925-4005
- KLEPERIS J ET AL: "Gas-sensitive gap formation by laser ablation in In2O3 layer: Application as humidity sensor" SENSORS AND ACTUATORS B, ELSEVIER SEQUOIA S.A., LAUSANNE, CH, Bd. 28, Nr. 2, August 1995 (1995-08), Seiten 135-138, XP004001448 ISSN: 0925-4005

## Beschreibung

### Technisches Gebiet

Die Erfindung betrifft eine Sensoranordnung zur Detektion der Betauung an Oberflächen mit in einer Widerstandsschicht ausgebildeten Interdigitalelektroden, die auf einem Trägermaterial ausgebildet ist. Zudem betrifft die Erfindung ein Verfahren zur Herstellung einer mit einem Trägermaterial versehenen Sensoranordnung.

### Stand der Technik

Sensoranordnungen der eingangs genannten Art sind aus dem Stand der Technik bekannt und dem Fachmann geläufig.

In der EP 1 021 704 B1 ist eine Sensoranordnung offenbart, bei der auf einer Trägerschicht eine Metallschicht angebracht ist. Die Metallschicht liegt wiederum in Gestalt von Interdigitalelektroden vor, die einen Kondensator bilden, wobei in den Kondensator ein temperaturabhängiger Widerstand integriert ist, der gleichzeitig als Temperatursensor und als Heizelement verwendet wird. Zudem ist auf der Metallschicht eine Passivierungsschicht angebracht. Die Passivierungsschicht besteht aus zwei Schichten, nämlich aus einer unteren hydrophoben Schicht und einer darüber angeordneten hydrophilen Schicht. Die hydrophile Schicht ist wiederum mit Kondensationskeimen versehen. Dadurch wird bei der Abkühlung der Sensoranordnung bereits bei einigen Kelvin vor dem Erreichen des Taupunktes ein detektierbarer Wasserfilm gebildet, der ein auswertbares Signal erzeugt. Die obere und untere Schicht sind dabei unmittelbar auf dem durch die Interdigitalelektroden ausgebildeten Kondensator aufgebracht. Bei den Schutzschichten kann es sich um Polymerschichten handeln.

Eine weitere Sensoranordnung der eingangs genannten Art offenbart die DE 37 20 189 C1. Aus der DE 37 20 189 C1 geht ein Taupunktsensor für ein Taupunkt-Messgerät zur Messung des Wasserdampf-Taupunktes in Gasen mit einer dem zu messenden Gas ausgesetzten Sensorfläche hervor, auf der bei Abkühlung auf die Taupunkt-Temperatur Wasserdampf kondensiert, und mit zwei an der Sensorfläche angebrachten Interdigitalelektroden mit in gleichmäßigem Abstand parallel zueinander angeordneten Elektrodenabschnitten, die mit einer feuchtigkeitsunempfindlichen Isolierschicht abgedeckt sind, wobei das Erreichen der Taupunkttemperatur durch Messung der Impedanz oder Kapazität zwischen den beiden Interdigitalelektroden festgestellt wird. Die Interdigitalelektroden sind dabei mit der feuchtigkeitsunempfindlichen Isolierschicht überzogen, die alle freien Flächen der Zähne der Interdigitalelektroden vollständig bedeckt. Die Isolierschicht besteht aus einem chemisch stabilen elektrisch isolierenden völlig feuchtigkeitsunempfindlichen Material. Hierfür kann auch ein geeignetes Metalloxid in Frage kommen. Die Taupunktdetektion beruht auf der Tatsache, dass sich die Gesamtimpedanz beim Erreichen der Taupunkttemperatur verändert, die dadurch verursacht wird, dass sich auf der Sensorfläche Kondensationströpfchen zu bilden beginnen. Auf der Sensorfläche bildet sich somit eine separate Kondensationströpfchenschicht aus, wobei sich auf der Sensorfläche weiterhin die mit einer Isolierschicht überzogenen Interdigitalelektroden befinden.

Vaivars G. et al.: "Influence of thin film coatings on the gas sensitivity properties of narrow laser cut gap in In2O3 on glass substrate", Sensors and Actuators, Bd. 33, Nr. 1; Juli 1996, Seiten 173-177, Elsevier und Kleperis J. et al.: "Gassensitive gap formation by laser ablation in In2O3 layer: application as humidity sensor", Sensors and Actuators, Bd. 28, Nr. 2, August 1995, Seiten 135-138, Elsevier beschreiben Experimente mit Sensoranordnungen, wobei die Oberfläche mit einem Laserstrahl derart bearbeitet wird, dass eine auf einem Glas-Substrat aufgebrachte In₂O₃-Schicht Vertiefungen aufweist.

Für die Funktionalität der aus dem Stand der Technik bekannten Sensoranordnungen ist es also erforderlich, dass die Sensoranordnungen mehrere Schichten inklusive einer Kondensationskeimschicht aufweisen.

Zur wirksamen Signaländerung des Sensors wird prinzipiell eine hydrophile Oberfläche verwendet.

### Darstellung der Erfindung, Aufgabe, Lösung, Vorteile

Ausgehend von der Würdigung des aufgezeigten Standes der Technik liegt der vorliegenden Erfindung die Aufgabe zugrunde, ein Verfahren zur Herstellung eines möglichst schnell reagierenden Betauungssensors vorzuschlagen, wobei der Betauungssensor mit möglichst geringem Aufwand und kostengünstig herstellbar ist und wobei die Detektion der Kondensation durch eine einfache Konstruktion mit extrem kurzer Ansprechzeit realisiert wird. Desweiteren soll eine Sensoranordnung der eingangs genannten Art zur Verfügung gestellt werden.

Diese Aufgabe wird durch ein Verfahren zur Herstellung einer Sensoranordnung sowie durch eine Sensoranordnung mit den in Anspruch 1 bzw. 11 angegebenen Merkmalen gelöst.

Vorteilhafte Ausgestaltung und zweckmäßige Weiterbildungen der vorliegenden Erfindung sind in den Unteransprüchen gekennzeichnet.

Die Erfindung sieht ein Verfahren zur Herstellung einer Sensoranordnung mit einem Trägermaterial, welches vorzugsweise aus einer Aluminiumoxidkeramik gebildet wird, vor.

Das Verfahren besteht dabei aus folgenden Verfahrensschritten:
a) Aufbringen von Kontaktelektroden auf das Trägermaterial,
b) Aufbringen einer Widerstandsschicht auf das Trägermaterial,
c) Erzeugung von Interdigitalelektroden aus der Widerstandsschicht durch Aufheizen, Schmelzen und Verdampfen von Teilen des Trägermaterials und der Widerstandsschicht mittels Laserstrahlung,
d) Kondensation von Teilen des verdampften Trägermaterials und Teilen der verdampften Widerstandsschicht auf den Interdigitalelektroden und in den Vertiefungen, die sich zwischen den Interdigitalelektroden befinden,
e) mechanische Stabilisierung der Kondensationskeime auf den Interdigitalelektroden und/oder in den Vertiefungen durch Aufsintern.

Somit kann von einer separaten Kondensationskeimschicht abgesehen werden und die Widerstandsschicht kann zugleich die Wirkung einer Kondensationskeimschicht entfalten.

Dabei geht vorzugsweise mit der Erzeugung von Interdigitalelektroden gleichzeitig die Formierung einer feuchtesensitiven hydrophilen Oberfläche auf den Interdigitalelektroden und den Vertiefungen einher, wobei Kondensationskeime auf die Interdigitalelektroden und Vertiefungen aufgebracht werden.

Im Rahmen des erfindungsgemäßen Verfahrens können die Interdigitalelektroden wie beschrieben aus einer Metalloxidschicht gebildet werden. Hierbei ist es sinnvoll, dass die Laserstrahlung eine Wellenlänge von 248 nm bis 1200 nm aufweist.

Diese nicht gänzlich geschlossene Kondensationskeimschicht wird in einem Sinterprozess mechanisch stabilisiert. Die Sinterparameter sind dabei so gewählt, dass bevorzugt Kondensationsteilchen einer bestimmten Korngröße miteinander versintern. In einer weiteren bevorzugten Ausführungsform der Erfindung sind nicht versinterte Kondensationskeime entfernt.

Zudem sieht das Verfahren bei Ausführung in SMD-Technik einen Auftrag eines Schutzlackes und Aufbringen der lötbaren, beispielsweise mittels galvanischer Abscheidung, oder klebbarer Endelektroden vor, sowie abschließend eine Ablösung des Schutzlacks und gleichzeitige Entfernung der nicht aufgesinterten Kondensationskeime erfolgt.

Damit hierbei die kammartige sensitive Struktur, die sich in den Interdigitalelektroden und in den durch die Laserstrahlung erzeugten Vertiefungen in der Widerstandsschicht bzw. in dem Trägermaterial manifestiert, nicht ebenfalls überzogen wird, ist diese vor der Fertigung der Endelektroden durch geeignete Schutzschichten abzudecken, welche im Anschluss des Prozesses wieder zu entfernen sind.

Die Widerstandsschicht, die durch einen Strukturierungsprozess zu zwei interdigital ineinander greifenden Elektroden geformt wird, bildet bei der erfindungsgemäßen Sensoranordnung auch die sensitive Schicht.

Somit erfolgt die Strukturierung der Interdigitalelektroden gleichzeitig mit der Formierung einer feuchtesensitiven hydrophilen Oberfläche derselben durch einen gebündelten Laserstrahl.

Durch die Wahl entsprechender Laserbearbeitungsparameter ist eine bis in das Trägermaterial hineinreichende Wirkung der Laserstrahlung wirksam. Das dabei verdampfte Widerstands- und Trägermaterial schlägt sich auf den Interdigitalelektroden nieder und wirkt an der Oberfläche als Kondensationskeimschicht, ohne dass sich eine geschlossene Schicht gänzlich ausbildet. Die lokale Verdampfung des Widerstands- und Trägermaterials führt bei Umgebungsatmosphäre zu einer Oxidation des sich als Keime auf der Oberfläche der Interdigitalelektroden und in den Zwischenräumen niederschlagenden Materials. Hierdurch wird in besonders einfacher und einzigartiger Weise eine Hydrophilisierung der Oberfläche erzeugt, wobei die Oberfläche die Wirkung einer Kondensationskeimschicht entfaltet. Aufwendige Fertigungsanlagen vergleichbar den Vakuumanlagen bei der Laserablation sind daher nicht notwendig. In einem folgenden Sinterprozess wird diese mit Keimen versehene Oberfläche mechanisch stabilisiert.

Die kombinierte Sensor- und Elektrodenschicht liegt als korrosionsstabile Schicht vor, die keine weitere Schutzschicht und Kondensationskeimschicht benötigt. Da zudem auf der Sensorschicht im Vergleich zu bekannten Sensoren keine Abdeckschicht aufgebracht ist, misst die erfindungsgemäße Sensoranordnung sehr schnell. Typische Detektionszeiten für eine Betauung liegen unter 500 ms. Zudem ergibt sich durch die vereinfachte Anordnung eine gegenüber dem Stand der Technik signifikant erhöhte Sensitivität der relativen Feuchte im Wertbereich oberhalb von 90 % und insbesondere 95 %.

Im Vergleich zum dargestellten Stand der Technik weist die erfindungsgemäße Sensoranordnung also einen erheblich vereinfachten und damit kostengünstigen Aufbau auf, der die Vorteile einer separaten Bekeimungsschicht enthält und damit insbesondere einen hohen Signalhub in kurzen Detektionszeiten ermöglicht.

Die feuchtesensitiven hydrophilen Oberflächen führen aufgrund einer Dampfdruckerniedrigung zu einer Taupunkttemperaturerhöhung an der Oberfläche. Daher kommt es eher zu einer Betauung, als es das Umgebungsklima (Taupunkttemperatur und relative Feuchtigkeit) bedingt. Als Messeffekt der Sensoranordnung wird die Adsorption von Wassermolekülen an der Oberfläche des Sensors genutzt.

Hierbei wirkt sich zum einen eine Kapazitätsänderung der Elektrodenstruktur durch die Änderung der Dielektrizität aus und zum Anderen eine Widerstandsänderung durch eine in Folge Ionenleitung sowie durch eine in Folge des Grothusmechanismus bedingte Änderung der Leitfähigkeit des absorbierten Wassers.

Der Aufbau des erfindungsgemäßen Sensors sieht eine zu strukturierende Widerstandsschicht auf einem Trägermaterial vor. Als Widerstandsschicht können vorteilhafter Weise Metalloxidschichten verwendet werden, vorzugsweise solche aus Rutheniumoxiden, Ruthenaten oder Iridiumoxiden.

Als Trägermaterialien können typische dem Fachmann bekannte Materialien, wie beispielsweise Leiterplattenmaterialien, Keramiken, Gläser oder Polymere in Form von Platten oder Folien verwendet werden.

Vorzugsweise sind an dem Trägermaterial zwei Kontaktelektroden angebracht, die mit den Interdigitalelektroden in Verbindung stehen.

Die Kontaktelektroden bestehen vorzugsweise aus einer metallischen Schicht und einer weiteren lötfähigen, bondfähigen oder mit Leitkleber kontaktierbaren Schicht.

Die Erfindung ermöglicht zudem eine deutlich kostengünstigere Herstellung eines Betauungssensors in SMD-Technik. Im Rahmen dieser Technik werden oberflächenmontierbare Bauelemente (z. B. Widerstände oder Kondensatoren) mittels lötfähiger oder klebbarer Anschlussflächen direkt auf eine Leiterplatte aufgebracht. Als Trägermaterial bietet sich dabei ein Standard-Keramiksubstrat an. Die erfindungsgemäße Sensoranordnung eignet sich für die automatisierte SMD-Bestückung von Leiterplatten.

Bei der Entfernung dieser Schutzschicht ergibt sich simultan eine vorteilhafte Ablösung des lockeren, nicht haftenden Materials auf der Sensoroberfläche, so dass die verbleibende mit Laserverfahren erzeugte keimbildende Schicht eine besondere mechanische Langzeitstabilität aufweist.

### Kurze Beschreibung der Zeichnungen

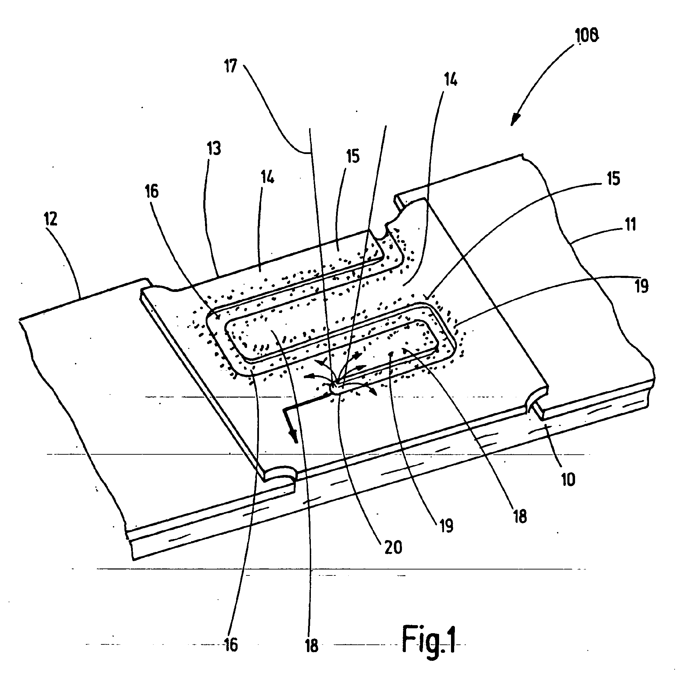

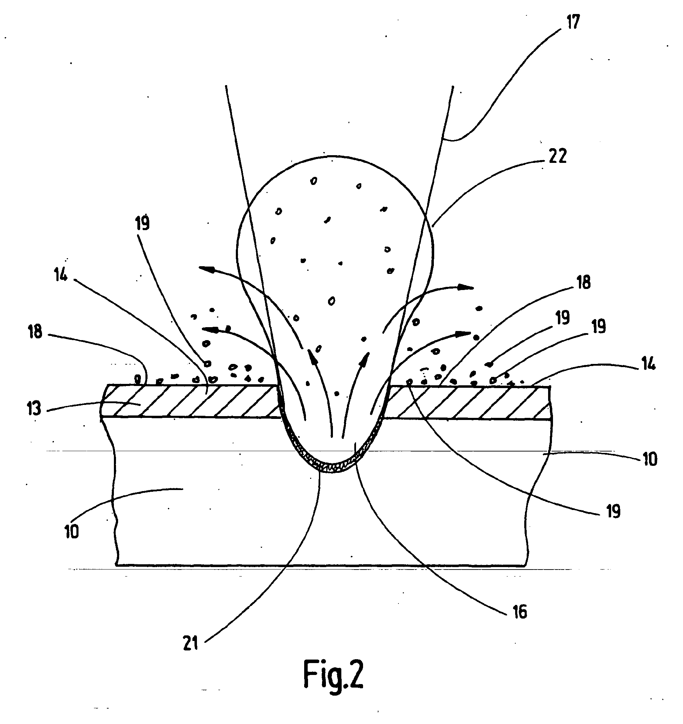

Im Folgenden wird die Erfindung anhand der Figuren 1 und 2 näher erläutert. Es zeigen in schematischen Darstellungen:
- Fig. 1: Eine Draufsicht auf eine Sensoranordnung gemäß der Erfin- dung, wobei mittels eines Laserstrahls Interdigitalelektroden auf einer Widerstandsschicht erzeugt werden;
- Fig. 2: Einen Querschnitt der Sensoranordnung aus Fig. 1.

### Bester Weg zur Ausführung der Erfindung

Die Figur 1 zeigt eine erfindungsgemäße Sensoranordnung, die mit dem Bezugzeichen 100 versehen ist.

Die Sensoranordnung 100 weist ein Trägermaterial 10 auf. Bei dem Trägermaterial 10 kann es sich um ein Aluminiumoxidsubstrat handeln. Zudem sind auf dem Trägermaterial 10 Kontaktelektroden 11,12 aufgebracht. Wie die Figur 1 weiter zu erkennen gibt, ist auf dem Trägermaterial 10 darüber hinaus eine Widerstandsschicht 13 angeordnet, bei der es sich vorzugsweise um eine Metalloxidschicht handelt. Sowohl die Kontaktelektroden 11,12 als auch die Metalloxidschicht können durch ein Siebdruckverfahren aufgebracht und nachfolgend bei geeigneten Temperaturen eingebrannt werden.

Die Sensoranordnung 100 weist die Interdigitalelektroden 14 auf, die in der Metalloxidschicht mittels Laserstrahlung 17 erzeugt werden. Die Widerstandsschicht 13, die durch diesen Strukturerzeugungsprozess zu den Interdigitalelektroden geformt wird, ist eine sensitive Schicht, die im Rahmen der Erfindung durch Einbringung von den Kondensationskeimen 19 eine feuchtesensitive hydrophile Oberfläche wird. Die Interdigitalelektroden 14 sind in der Figur 1 dargestellten Ausführungsform jedoch nicht vollständig dargestellt. Die Interdigitalelektroden 14 haben prinzipiell die Form von ineinander gesteckten Kämmen, wobei die parallel verlaufenen Zähne 15 der Interdigitalelektroden 14 dabei von furchenartigen Vertiefungen 16 voneinander getrennt sind, die durch einen gebündelten Laserstrahl 17 erzeugt sind. Die Interdigitalelektroden 14 stehen mit den Kontaktelektroden 11,12 in Verbindung, um eine Spannung anlegen zu können. Die furchenartigen Vertiefungen 16 ragen durch die Widerstandsschicht 13 bis in das Trägermaterial 10 hinein. Die Interdigitalelektroden 14 und Vertiefungen 16 weisen eine feuchtesensitive hydrophile Oberfläche 18 auf, die aufgesinterte Kondensationskeime 19 enthält. Die lokale Verdampfung von Material der Widerstandsschicht 13 und des Trägermaterials 10 durch den Laserstrahl 17 führt bei Umgebungsatmosphäre zu einer Oxidation des sich als Kondensationskeime 19 auf den Interdigitalelektroden 14 niederschlagenden Materials. Hierdurch wird in besonders einfacher und einzigartiger Weise eine Hydrophilisierung der Oberfläche der Interdigitalelektroden 14 erzeugt. Die Kondensationskeime 19 werden mittels Laserstrahlug 17, die das Aufheizen, Schmelzen und Verdampfen von Teilen der Widerstandsschicht 13 und des Trägermaterials 10 bewirkt, zur Oberfläche der Interdigitalelektroden 14 befördert. Dieser Vorgang ist in Figur 1 mit dem Bezugszeichen 20 gekennzeichnet. Wie der Figur 1 auch zu entnehmen ist, nimmt die Dichte der Kondensationskeime 19 auf der Oberfläche der Interdigitalelektroden 14 in Richtung der Vertiefungen 16 zu.

Der Prozess einer Formierung einer feuchtesensitiven hydrophilen Oberfläche mit aufgebrachten bzw. eingebrachten Kondensationskeimen 19 wird noch einmal anhand der Figur 2 erläutert. Auch in der in Figur 2 dargestellten Ausführungsform dient als Trägermaterial 10 ein Aluminiumoxidsubstrat, auf welches auch hier beispielsweise durch Siebdruckverfahren Kontaktelektroden 11,12 und als Widerstandsschicht 13 eine Metalloxidschicht aufgebracht und nachfolgend bei geeigneten Temperaturen eingebrannt werden. Die Interdigitalelektroden 14 werden durch den gebündelten Laserstrahl 17, vorzugsweise bei einer Wellenlänge von ca. 532 nm oder im Bereich um 1064 nm in der Widerstandsschicht 13 erzeugt. Der Laserstrahl 17 erzeugt die Vertiefung 16, die durch die Widerstandschicht 13 bis in das Trägermaterial 10 hineinragt. Die bis in das Trägermaterial 10 hineinreichende Wirkung der Laserstrahlung 17 bewirkt ein Aufheizen, Schmelzen und Verdampfen sowohl von Teilen der Widerstandsschicht 13 als auch von Teilen des Trägermaterials 10. Dies hat wiederum zur Folge, dass sich innerhalb der Vertiefung 16 eine Reaktionszone 21 in Gestalt einer Schmelzzone herausbildet. Der so erzeugte Materialdampf 22 entweicht aus der Vertiefung 16 und schlägt sich auf den Interdigitalelektroden 14 und den Vertiefungen 16 in Form von Kondensationskeimen 19 nieder, so dass die Oberfläche der Interdigitalelektroden 14 in Gestalt einer feuchtesensitiven hydrophilen Oberfläche vorliegt, die als Kondensationskeimschicht wirkt, ohne jedoch als eine separate Schicht ausgebildet zu sein. In einem darauf folgenden Sinterprozess werden die Kondensationskeime 19 stabilisiert, indem die Kondensationskeime 19 auf der Oberfläche der Interdigitalelektroden und der Zwischenräume aufgesintert werden. Auf der Sensoranordnung 100 hat sich somit eine feuchtesensitive hydrophile Oberfläche 18 ausgebildet, die die Funktion einer mechanisch-stabilisierten Kondensationskeimschicht aufweist. Die Sinterparameter sind- dabei so gewählt, dass bevorzugt Kondensationskeime 19 zu einer bestimmten Korngröße miteinander versintern. Die restlichen nicht versinterten Kondensationskeime werden mit einer Galvanikschutzschicht nach einer Galvanisierung entfernt.

### Bezugszeichenliste:

- 100: Sensoranordnung
- 10: Trägermaterial
- 11: Kontaktelektroden
- 12: Kontaktelektroden
- 13: Widerstandsschicht
- 14: Interdigitalelektroden
- 15: Zähne
- 16: Vertiefungen
- 17: Laserstrahl
- 18: feuchtesensitive hydrophile Oberfläche / Kon- densationskeimschicht
- 19: Kondensationskeime 20 Vorgang
- 21: Reaktionszone
- 22: Materialdampf

## Patentansprüche

1. Verfahren zur Herstellung einer Sensoranordnung (100) mit folgenden Verfahrensschritten:
a) Aufbringen von Kontaktelektroden (11, 12) auf ein Trägermaterial (10),
b) Aufbringen einer Widerstandsschicht (13) auf das Trägermaterial (10),
c) Erzeugung von Interdigitalelektroden (14) in der Widerstandsschicht (13) durch Aufheizen, Schmelzen und Verdampfen von Teilen des Trägermaterials (10) und der Widerstandsschicht (13) mittels Laserstrahlung,
d) Kondensation von Teilen des verdampften Trägermaterials (10) und Teilen der verdampften Widerstandsschicht (13) als kondensationsReime (19) auf den Interdigitalelektroden (14) und in den Vertiefungen (16), die sich zwischen den Interdigitalelektroden (14) befinden, und
e) mechanische Stabilisierung der Kondensationskeime (19) auf den Interdigitalelektroden (14) und/oder in den Vertiefungen (16) durch Aufsintern.

2. Verfahren nach Anspruch 1, **dadurch gekennzeichnet, dass** das Trägermaterial (10) vorzugsweise aus einer Aluminiumoxidkeramik gebildet wird, wobei mit der Erzeugung der Interdigitalelektroden (14) gleichzeitig die Formierung einer feuchtesensitiven hydrophilen Oberfläche (18) auf den Interdigitalelektroden (14) und den Vertiefungen (16) einhergeht, wobei die Kondensationskeime (19) auf die Oberfläche der Interdigitalelektroden (14) und der Vertiefungen (16) aufgebracht werden.

3. Verfahren nach Anspruch 1 oder 2, **dadurch gekennzeichnet, dass** bei Ausführung in SMD-Technik erst ein Auftrag eines Schutzlackes und danach das Aufbringen von lötfähigen, beispielsweise mittels galvanischer Abscheidung, oder klebbarer Endelektroden, sowie abschließend eine Ablösung des Schutzlackes und gleichzeitige Entfernung der nicht aufgesinterten Kondensationskeime (19) erfolgt.

4. Verfahren nach einem der vorhergehenden Ansprüche, **dadurch gekennzeichnet, dass** als Trägermaterial (10) eine Aluminiumoxidkeramik in Dickschichtqualität eingesetzt wird.

5. Verfahren nach einem der vorhergehenden Ansprüche, **dadurch gekennzeichnet, dass** die Interdigitalelektroden (14) aus einer Metalloxidschicht, vorzugsweise aus Rutheniumoxiden, Ruthenaten oder Iridiumoxiden gebildet werden.

6. Verfahren nach einem der vorhergehenden Ansprüche, **dadurch gekennzeichnet, dass** die Laserstrahlung (17) bei einer Wellenlänge von 248 nm bis 1200 nm erfolgt.

7. Verfahren nach einem der vorhergehenden Ansprüche, **dadurch gekennzeichnet, dass** die mechanische Stabilisierung durch einen Sinterprozess erfolgt.

8. Verfahren nach einem der vorhergehenden Ansprüche, **dadurch gekennzeichnet, dass** die nicht aufgesinterte Kondensationskeime mit einer Galvanikschutzschicht nach einer Galvanisierung entfernt werden.

9. Verfahren nach einem der vorhergehenden Ansprüche, **dadurch gekennzeichnet, dass** das Verfahren nicht im Vakuum durchgeführt wird.

10. Verfahren nach einem der vorhergehenden Ansprüche, **dadurch gekennzeichnet, dass** sich durch die Laserstrahlung (17) eine Reaktionszone (21) bildet, in der das Aufheizen, Schmelzen und Verdampfen des Trägermaterials (10) und der Widerstandsschicht (13) erfolgt.

11. Sensoranordnung (100) zur Detektion der Betauung an Oberflächen, mit in einer Widerstandsschicht (13) ausgebildeten Interdigitalelektroden (14), die auf einem Trägermaterial (10) ausgebildet ist, hergestellt durch das Verfahren nach einem der vorhergehenden Ansprüche, wobei Interdigitalelektroden (14) und Vertiefungen (16) zwischen den Interdigitalelektroden (14) eine feuchtesensitive hydrophile Oberfläche (18) durch aufgebrachte Kondensationskeime (19) aufweisen, und wobei die Kondensationskeime (19) aufgesintert sind.

12. Sensoranordnung nach Anspruch 11, **dadurch gekennzeichnet, dass** die Widerstandsschicht (13) aus einer Metalloxidschicht gebildet ist, die auf dem Trägermaterial (10) ausgebildet ist.

13. Sensoranordnung nach Anspruch 11 oder 12, **dadurch gekennzeichnet, dass** die Kondensationskeime aus Teilen der Metalloxidschicht und Teilen des Trägermaterials (10) bestehen.

14. Sensoranordnung nach einem der Ansprüche 11 bis 13, **dadurch gekennzeichnet, dass** das Trägermaterial (10) ein Substratträgermaterial (10) aus Aluminiumoxid, Leiterplattenmaterial, Glas oder Glaskeramik ist und/oder auf dem Trägermaterial (10) zwei Endkontakte (11, 12) aufgebracht sind, die mit den Interdigitalelektroden (14) in Verbindung stehen.

15. Sensoranordnung nach einem der Ansprüche 11 bis 14, **dadurch gekennzeichnet, dass** die Metalloxidschicht aus Rutheniumoxiden, Ruthenaten oder Iridiumoxiden besteht und/oder die Metalloxidschicht eine Metalloxidpaste ist.

16. Sensorordnung nach einem der Ansprüche 11 bis 15, **dadurch gekennzeichnet, dass** sich zwischen Zähnen (15) der Interdigitalelektroden (14) Vertiefungen (16) befinden, die durch Laserstrahlen (17) erzeugt sind, wobei die Dichte der Kondensationskeime (19) auf den Interdigitalelektroden (14) in Richtung der Vertiefungen (16) zunimmt.

## Claims

1. A method of producing a sensor arrangement (100) using the following process steps:
a) application of contact electrodes (11, 12) to a carrier material (10),
b) application of a resistance layer (13) to the carrier material (10),
c) production of interdigital electrodes (14) in the resistance layer (13) by heating, melting and evaporating parts of the carrier material (10) and the resistance layer (13) by means of laser radiation,
d) condensation of parts of the evaporated carrier material (10) and parts of the evaporated resistance layer (13) as cloud condensation nuclei (19) on the interdigital electrodes (14) and in the depressions (16) located between the interdigital electrodes (14) and
e) mechanical stabilisation of the cloud condensation nuclei (19) on the interdigital electrodes (14) and/or in the depressions (16) by sintering.

2. The method according to claim 1, **characterised in that** the carrier material (10) is preferably formed from an aluminium oxide ceramic, wherein the formation of a moisture-sensitive, hydrophilic surface (18) on the interdigital electgrodces (14) and the depressions (16) simultaneously accompanies the production of interdigital electrodes (14), wherein the cloud condensation nuclei (19) are applied to the surface of the interdigital electrodes (14) and the depressions (16).

3. The method according to claim 1 or 2, **characterised in that** when SMD technology is used a coat of protective lacquer is applied first, followed by the application of solderable, by means of electro-deposition, for example, or adhesive terminal electrodes, and finally the stripping of the protective lacquer and simultaneous removal of the unsintered cloud condensation nuclei (19).

4. The method according to one of the preceding claims, **characterised in that** an aluminium oxide ceramic is used in thick-layer quality as the carrier material (10).

5. The method according to one of the preceding claims, **characterised in that** the interdigital electrodes (14) are formed from a metal oxide layer, preferably of ruthenium oxides, ruthenates or iridium oxides.

6. The method according to one of the preceding claims, **characterised in that** the laser radiation (17) takes place at a wavelength of 248 nm to 1200 nm.

7. The method according to one of the preceding claims, **characterised in that** mechanical stabilisation is achieved by a sintering process.

8. The method according to one of the preceding claims, **characterised in that** the unsintered cloud condensation nuclei are removed with an electroplated protection layer following electroplating.

9. The method according to one of the preceding claims, **characterised in that** the process is not conducted in a vacuum.

10. The method according to one of the preceding claims, **characterised in that** a reaction zone is formed by laser radiation (17), in which the heating, melting and evaporation of the carrier material (10) and the resistance layer (13) takes place.

11. A sensor arrangement (100) for the detection of condensation on surfaces, with interdigital electrodes (14) formed in a resistance layer (13), which forms on a carrier layer (10), produced by the method according to one of the preceding claims, wherein interdigital electrodes (14) and depressions (16) display a moisture-sensitive, hydrophilic surface (18) between the interdigital electrodes (14) through applied cloud condensation nuclei (19) and wherein the cloud condensation nuclei (19) are sintered.

12. The sensor arrangement according to claim 11, **characterised in that** the resistance layer (13) is formed from a metal oxide layer, which is formed on the carrier material (10).

13. The sensor arrangement according to claim 11 or 12, **characterised in that** the cloud condensation nuclei are made up of parts of the metal oxide layer and parts of the carrier material (10).

14. The sensor arrangement according to one of the claims 11 to 13, **characterised in that** the carrier layer (10) is a substrate carrier material (10) made of aluminium oxide, printed circuit board material, glass or glass-ceramic and/or two terminal contacts (11, 12) are applied to the carrier material (10), which are connected to the interdigital electrodes (14).

15. The sensor arrangement according to one of the claims 11 to 14, **characterised in that** the metal oxide layer is made from ruthenium oxides, ruthenates or iridium oxides and/or the metal oxide layer is a metal oxide paste.

16. The sensor arrangement according to one of the claims 11 to 15, **characterised in that** there are depressions (16) between teeth (15) of the interdigital electrodes (14), which are produced by laser beams (17), wherein the density of the cloud condensation nuclei (19) on the interdigital electrodes (14) increases towards the depressions (16).

## Revendications

1. Procédé pour fabriquer un agencement capteur (100) comprenant les étapes de procédé suivantes :
a) application d'électrodes de contact (11, 12) sur un matériau support (10),
b) application d'une couche de résistance (13) sur le matériau support (10),
c) fabrication d'électrodes internumériques (14) dans la couche de résistance (13) par réchauffement, fusion et évaporation de parties du matériau support (10) et de la couche de résistance (13) au moyen de rayonnement laser,
d) condensation de parties du matériau support (10) évaporé et de parties de la couche de résistance (13) évaporée en tant que germes de condensation (19) sur les électrodes internumériques (14) et dans les cavités (16), qui se trouvent entre les électrodes internumériques (14), et
e) stabilisation mécanique des germes de condensation (19) sur les électrodes internumériques (14) et/ou dans les cavités (16) par frittage.

2. Procédé selon la revendication 1, **caractérisé en ce que** le matériau support (10) est formé de préférence à base d'une céramique d'oxyde d'aluminium, la formation d'une surface (18) hydrophile sensible à l'humidité sur les électrodes internumériques (14) et les cavités (16) accompagnant simultanément la fabrication des électrodes internumériques (14), les germes de condensation (19) étant appliquées sur la surface des électrodes internumériques (14) et des cavités (16).

3. Procédé selon la revendication 1 ou 2, **caractérisé en ce que**, en cas de réalisation dans la technique des montages en surface, on a d'abord une application d'une laque de protection, puis l'application d'électrodes finales brasables, par exemple par électrodéposition, ou collables, et ensuite un décollement de la laque de protection et un enlèvement simultané des germes de condensation (19) non frittés.

4. Procédé selon l'une quelconque des revendications précédentes, **caractérisé en ce qu'**une céramique d'oxyde d'aluminium dans la qualité de couche épaisse est utilisée comme matériau support (10).

5. Procédé selon l'une quelconque des revendications précédentes, **caractérisé en ce que** les électrodes internumériques (14) sont formées à base d'une couche d'oxyde de métal, de préférence à base d'oxydes de ruthénium, de ruthénates ou d'oxydes d'iridium.

6. Procédé selon l'une quelconque des revendications précédentes, **caractérisé en ce que** le rayonnement laser (17) s'effectue avec une longueur d'onde de 248 nm à 1 200 nm.

7. Procédé selon l'une quelconque des revendications précédentes, **caractérisé en ce que** la stabilisation mécanique est effectuée par un processus de frittage.

8. Procédé selon l'une quelconque des revendications précédentes, **caractérisé en ce que** les germes de condensation non frittés sont enlevées avec une couche de protection galvanique après une galvanisation.

9. Procédé selon l'une quelconque des revendications précédentes, **caractérisé en ce que** le procédé n'est pas mis en oeuvre dans le vide.

10. Procédé selon l'une quelconque des revendications précédentes, **caractérisé en ce qu'**une zone de réaction (21) se forme par le rayonnement laser (17), zone dans laquelle on procède au réchauffement, à la fusion et à l'évaporation du matériau support (10) et de la couche de résistance (13).

11. Agencement capteur (100) pour la détection du dégel sur des surfaces, doté d'électrodes internumériques (14) formées dans une couche de résistance (13), qui est réalisé sur un matériau support (10), fabriqué par le procédé selon l'une quelconque des revendications précédentes, des électrodes internumériques (14) et des cavités (16) présentant entre les électrodes internumériques (14) une surface (18) hydrophile et sensible à l'humidité par des germes de condensation (19) appliquées dessus, et les germes de condensation (19) étant frittées.

12. Agencement capteur selon la revendication 11, **caractérisé en ce que** la couche de résistance (13) est formée d'une couche d'oxyde de métal, qui est réalisée sur le matériau support (10).

13. Agencement capteur selon la revendication 11 ou 12, **caractérisé en ce que** les germes de condensation sont constituées de parties de la couche d'oxyde de métal et de parties du matériau support (10).

14. Agencement capteur selon l'une quelconque des revendications 11 à 13, **caractérisé en ce que** le matériau support (10) est un matériau support de substrat (10) à base d'oxyde d'aluminium, de matériau de plaque de circuits imprimés, de verre ou de vitrocéramique et/ou deux contacts extrêmes (11, 12), qui sont en liaison avec les électrodes internumériques (14), sont appliqués sur le matériau support (10).

15. Agencement capteur selon l'une quelconque des revendications 11 à 14, **caractérisé en ce que** la couche d'oxyde de métal est à base d'oxydes de ruthénium, de ruthénates ou d'oxydes d'iridium et/ou la couche d'oxyde métallique est une pâte d'oxyde métallique.

16. Agencement capteur selon l'une quelconque des revendications 11 à 15, **caractérisé en ce que** des cavités (16), qui sont générées par des faisceaux laser (17), se trouvent entre des dents (15) des électrodes internumériques (14), la densité des germes de condensation (19) augmentant en direction des cavités (16) sur les électrodes internumériques (14).
